# EUROPÄISCHE PATENTSCHRIFT

(11) **EP 3 487 362 B1**
(45) Veröffentlichungstag und Bekanntmachung des Hinweises auf die Patenterteilung: **03.03.2021**
(21) Anmeldenummer: 17734302.7
(22) Anmeldetag: 29.06.2017
(51) Int. Cl.: A47G 27/02

(54) **BODEN-MATTE**
FLOOR MAT
TAPIS DE SOL

(30) Priorität: 22.07.2016 DE 102016113585
(43) Veröffentlichungstag der Anmeldung: 29.05.2019
(73) Patentinhaber: aeris GmbH, 85540 Haar bei München (DE)
(72) Erfinder: GLÖCKL, Josef, 85551 Kirchheim (DE)
(74) Vertreter: Staeger & Sperling Partnerschaftsgesellschaft mbB
(86) Internationale Anmeldenummer: PCT/EP2017/066192
(87) Internationale Veröffentlichungsnummer: WO 2018/015128

(56) Entgegenhaltungen:
- GB-A- 2 093 370
- US-A- 2 057 171
- US-A- 5 787 655
- US-A1- 2014 342 126
- US-A1- 2015 374 157
- US-B1- 7 670 026

## Beschreibung

Die Erfindung betrifft eine Boden-Matte zur Benutzung an einem Steharbeitsplatz.

Das Arbeiten an einem Steharbeitsplatz ist in der Regel gegenüber einem reinen Sitz-Arbeitsplatz, z.B. an einem Schreibtisch, zu bevorzugen. Besonders günstig ist es für einen Mitarbeiter, wenn zum einen die Gelegenheit zu gelegentlichem Sitzen oder ein Anlehnen an einen Stehhocker geboten ist und zum anderen ein Stehplatz angeboten sind, wodurch ein weitgehend ermüdungsfreies Arbeiten ermöglicht ist.

Eine Ermüdung während des stehenden Arbeitens kann weitgehend durch eine sogenannte aktive Matte verringert werden. Daher sollten Matten für Steharbeitsplätze so konstruiert sein, dass sie ein Ermüden hinausschieben und auch allgemein helfen, gesundheitlichen Problemen vorzubeugen.

Zwar sind verschiedene Matten für einen Steharbeitsplatz erhältlich, diese führen jedoch in relativ kurzer Zeit zu einer Ermüdung der Füße und der Beine. Sie bestehen oft aus einem homogenen PUR-Integralweichschaum und/oder können an ihrer Oberfläche eine Anordnung von runden Scheiben aufweisen, die zum einen einen relativ sicheren Tritt und zum anderen für den Fuß eine Orientierung bewirken. Andere sind wiederum mit einem Halbkugelprofil an der Oberseite ausgestattet. Die genannten Gestaltungen an der Oberflächen sollen ein Verzögern der Ermüdung der Füße und Beine bewirken oder zumindest eine solche Ermüdung reduzieren.

Diese bekannten Matten sind jedoch für ein längeres Steharbeiten an einem Platz trotz ihrer Oberflächengestaltung und Weichheit nicht für die Vermeidung von Ermüdung und zur Erhaltung der Aufmerksamkeit und Frische geeignet, weil die Propriozeptoren nicht hinreichend aktiviert werden. Gerade eine weiche Struktur einer Matte ist diesbezüglich kontraproduktiv. Mit dem Fortschreiten der im Stehen verbrachten Arbeitszeit hat die stehend arbeitende Person das Empfinden, die Beine nicht mehr zu verspüren und es steigt das Bedürfnis nach einer anderen Körperhaltung - die Person lässt sich in den nächststehenden Sessel fallen. Es ist somit erforderlich, den Füße und Beinen Reize bieten, wenn Ermüdungserscheinungen vermieden oder zumindest hinausgezögert werden sollen.

Boden-Matten sind beispielsweise aus den Schriften US 7 670 026 B1, US 2 057 171 A, US 5 787 655 A, US 2015/374157 A1, GB 2 093 370 A und US 2014/342126 A1 bekannt.

Der Erfindung liegt deshalb die Aufgabe zugrunde, eine Matte bereitzustellen, die eine Ermüdung der Füße bei stehendem Arbeiten vermindert vermeiden hilft.

Die Aufgabe wird erfindungsgemäß durch eine Boden-Matte mit einer Mattenoberfläche an einem Steharbeitsplatz gelöst, bei der eine unter der Mattenoberfläche ausgebildete Matten-Struktur aus einem elastomeren Werkstoff besteht, in der unregelmäßig verteilt Elemente angeordnet sind, deren Beschaffenheit härter ist als die Beschaffenheit des elastomerem Werkstoffs der Matten-Struktur.

Es ist dabei günstig, dass die Elemente mit der härteren Beschaffenheit durch unterschiedliche Materialien bereitgestellt sind und dass sich die Matten-Struktur aus elastomerem Werkstoff an der Mattenoberfläche im Wesentlichen homogen erstreckt.

Die unterschiedlich harten Bereiche, d.h. die Elemente, üben auf die Fußsohlen fortwährend unterschiedliche taktile Reize aus, wodurch eine monotone flächige Dauerbeanspruchung der Fußsohle vermieden wird. Der ständige Reiz wird vom Gehirn wahrgenommen, was reagieren muss und deshalb länger aufmerksam und wach bleibt.

Durch die ebene Oberfläche wird zum einen vermieden, dass bei einer Bewegung der Füße diese unbeabsichtigt an Oberflächenstrukturen wie Noppen oder Scheiben hängen bleiben. Zum anderen wird durch die Anordnung der weichen Schicht unter der Oberfläche bewirkt, dass die unterschiedlichen harten Bereiche deutlich von den Füßen wahrgenommen werden können.

Erfindungsgemäß ist die Matten-Struktur auf einem Basisteil angeordnet, auf/an dem die Elemente in Form von Erhebungen ausgebildet sind.

Die harten Elemente können in der Matte als singuläre Einschlüsse von dem weicheren Material zum Teil umschlossen und auf einer harten Schicht von unten abgestützt sein. Hierdurch können die Elemente von den Füßen selbst dann wahrgenommen werden, wenn man mit Schuhen auf der Matte steht, die mit einer dickeren Sohle versehen sind.

Mit Vorteil erstrecken sich die Erhebungen unterschiedlich hoch nach oben. Hierdurch erfährt der Fuß unterschiedliche Druckreize.

Wenn die Elemente, die härter sind als das Material der Matten-Struktur, zu räumlichen Körpern in Form von unterschiedlich bemessenen Würfeln, Quadern, Kegelstumpfen, Tonnen oder dergleichen ausgebildet sind, dann ist die Vielfalt der Einzelwahrnehmungen erhöht und das Reizangebot hoch und reich an Varianten, so dass ein großes Wahrnehmungspotential geboten ist. Dies kann noch dadurch gesteigert werden, dass die Körper regelmäßig und unregelmäßig geformt sind sowie geneigt auf einer Unterlagenschicht angeordnet sind. Es versteht sich, dass regelmäßig und unregelmäßig geformte Körper über die Mattenfläche verteilt angeordnet sein können.

Mit Vorteil sind zwischen den unregelmäßig verteilten Elementen besondere Freibereiche angeordnet, deren Fläche größere ist als der der mittlere Abstand aller Elemente voneinander. Hierdurch wird dem Fuß ein Bereich ohne Druck geboten, so dass eine gewisse Variation an Empfindungen gegeben ist.

Die Matten-Struktur ist erfindungsgemäß als ein Oberteil der Boden-Matte mit darin geformten Ausnehmungen ausgebildet, in denen die harten Elemente aufgenommen sind.

Das Oberteil weist hinter seinem umlaufenden Rand eine nach innengerichtete Nut auf, in die der Außenrand des Basisteils aufgenommen ist. Des Weiteren ist der Randbereich mit einer umlaufende Fase ausgebildet.

Andere vorteilhafte Weiterbildungen der Erfindung sind in den Unteransprüchen gekennzeichnet bzw. werden nachstehend zusammen mit der Beschreibung der bevorzugten Ausführungen der Erfindung anhand der Figuren näher dargestellt. Es zeigen:
- Fig. 1: Eine perspektivische Darstellung eines ersten Ausführungsbeispiels einer erfindungsgemäßen Matte in Ansicht von oben schräg rechts,
- Fig. 2: eine perspektivische Darstellung eines zweiten Ausführungsbeispiels einer erfindungsgemäßen Matte in Ansicht von oben schräg rechts mit einer Einrichtung zu Befestigung einer Bezeichnung,
- Fig. 3: eine Draufsicht auf eine Matte gemäß dem zweiten Ausführungsbeispiel,
- Fig. 4: eine Seitenansicht eines Teilbereichs einer Matte gemäß zweitem Ausführungsbeispiel,
- Fig. 5: eine Explosiv-Ansicht in perspektivischer Darstellung des zweiten Ausführungsbeispiels der erfindungsgemäßen Matte von oben schräg rechts mit einem Oberteil und einem Basisteil,
- Fig. 6: eine Explosiv-Ansicht in perspektivische Darstellung des zweiten Ausführungsbeispiels der erfindungsgemäßen Matte von unten schräg rechts,
- Fig. 7: das Oberteil der Matte nach dem ersten Ausführungsbeispiel in Ansicht von unten,
- Fig. 8: eine perspektivische Teil-Ansicht des Oberteils des zweiten Ausführungsbeispiels von unten,
- Fig. 9 a): das Basisteil der Boden-Matte mit den darauf angeordneten Elementen nach dem ersten Ausführungsbeispiel in Draufsicht,

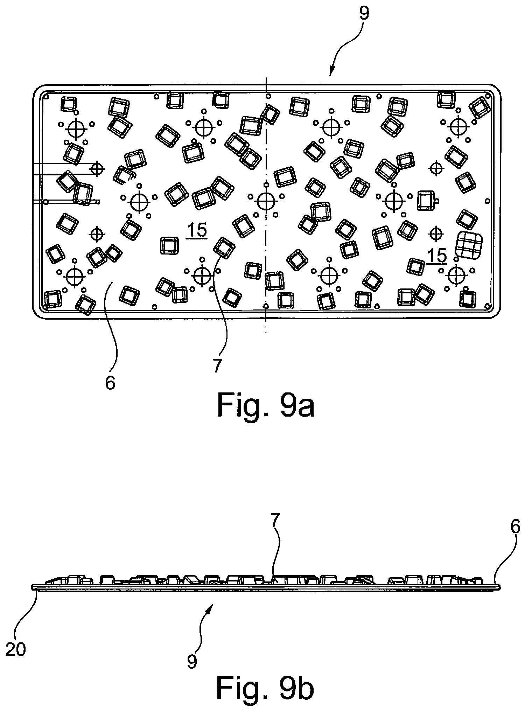

- Fig. 9 b): das Basisteil der Boden-Matte mit den darauf angeordneten Elementen nach dem ersten Ausführungsbeispiel in Seitenansicht,

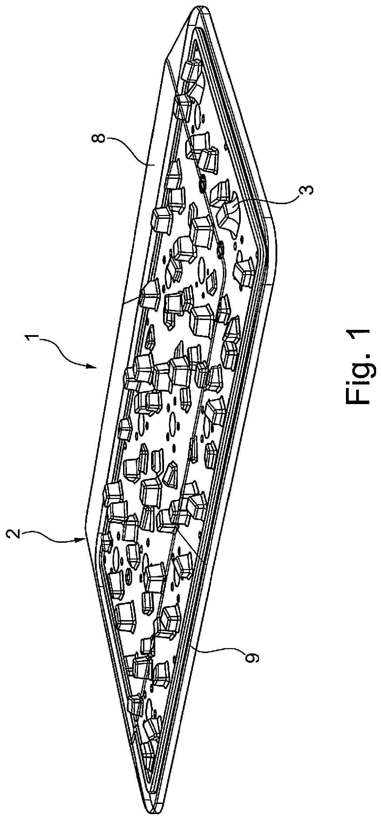

In Fig. 1 ist eine perspektivische Darstellung eines ersten Ausführungsbeispiels einer erfindungsgemäßen Boden-Matte 1 in Ansicht von oben schräg rechts wiedergegeben. Die Matte wird an einem Steharbeitsplatz eingesetzt. Je nach Einsatzort können deren Maße variieren, in der Regel beträgt die Breite zwischen 80 cm und 150 cm, die Tiefe zwischen 50 cm und 100 cm und die Dicke zwischen 3 cm und 12 cm. Die dargestellte Boden-Matte 1 weist mindestens zwei unterschiedlichen Strukturen 2, 3 mit unterschiedlichen Materialeigenschaften auf, nämlich zum einen eine weichere Beschaffenheit und zum anderen eine härtere Beschaffenheit. Die härteren Strukturen 3 sind in der Matte unregelmäßig verteilt angeordnet. Das weichere Material besteht aus einem elastomeren Werkstoff und bildet ein Oberteil 8 mit einer ebenen Mattenoberfläche 4.

Die unterschiedlichen Struktur- oder Materialeigenschaften werden durch unterschiedliche Materialien bereitgestellt, wobei das weichere Material des Oberteils 8 ein elastomerer Schaum-Werkstoff ist, der sich unter der Mattenoberfläche 4 im Wesentlichen homogen erstreckt.

Das Oberteil 8 ist auf einem Basisteil 9 angeordnet, das unten näher erläutert wird.

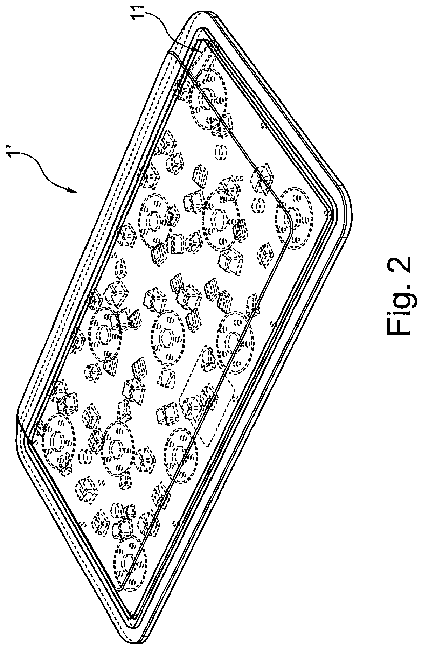

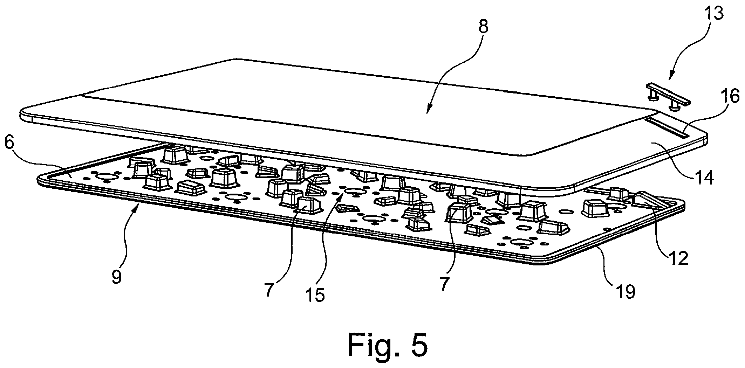

Fig. 2 zeigt eine perspektivische Darstellung eines zweiten Ausführungsbeispiels einer erfindungsgemäßen Matte 1' in Ansicht von oben schräg rechts mit einer Einrichtung 11 zum Befestigen einer Aufnahme 12 für ein Schild 13, vergl. Fig.5.

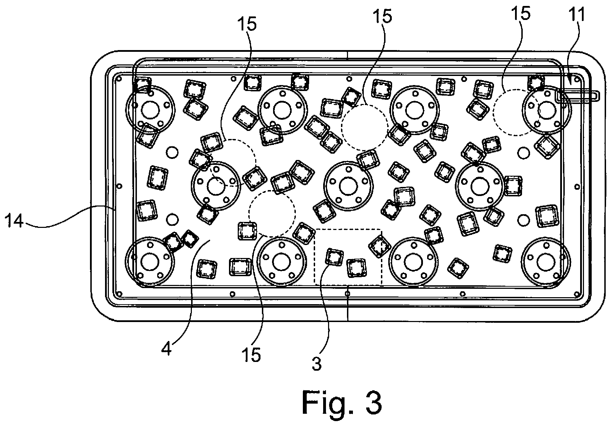

Eine Draufsicht auf die Matte 1' gemäß dem zweiten Ausführungsbeispiel ist in Fig.3 dargestellt. Die Mattenoberfläche 4 ist im Vergleich zur Fläche der Basisschicht 6 des Basisteil 9 etwas kleiner und um eine Fase 14 nach innen zurückversetzt. In dem dargestellten Ausführungsbeispiel ist die schräge Fläche der Fase im hinteren Bereich der Matte ist steiler ausgebildet als die Fasen an der Seite und an der Vorderkante. In der Darstellung der Fig. 3 sind größere Bereiche als Freiräume 15 mit Umkreisungen markiert, in denen sich keine harten Strukturen befinden. In diesen Bereichen 15 erstreckt sich das weiche Material ohne Unterbrechung durch eine Einlagerung oder eine Erhebung 7 von der Mattenoberfläche des Oberteils 8 bis zur Basisschicht 6 des Basisteils. Wenn ein Benutzer auf einer solchen Stelle steht, dann sinkt der Fuß weich ein. Verändert der Benutzer jedoch den Ort, dann steht der Fuß auf mindestens einer Erhebung 7 oder 7'.

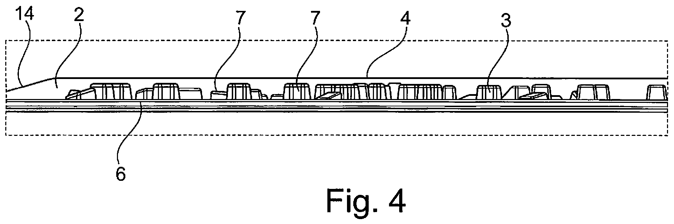

Wie aus Fig. 4 ersichtlich, sind die die Elemente 3 bildenden Erhebungen 7 unterschiedlich hoch, so dass der Druck auf die Fußsohle ebenfalls unterschiedlich stark ist. Dies hat zur Folge, dass der Benutzer häufig die Haltung und den Ort, auf den er den Fuß aufsetzt, wechselt und somit ständig in Bewegung ist. Die unterschiedlichen Druckreize auf die Fußsohle aktivieren die Rezeptoren und Reflexzonen, wodurch wiederum die Gehirntätigkeit stimuliert wird.

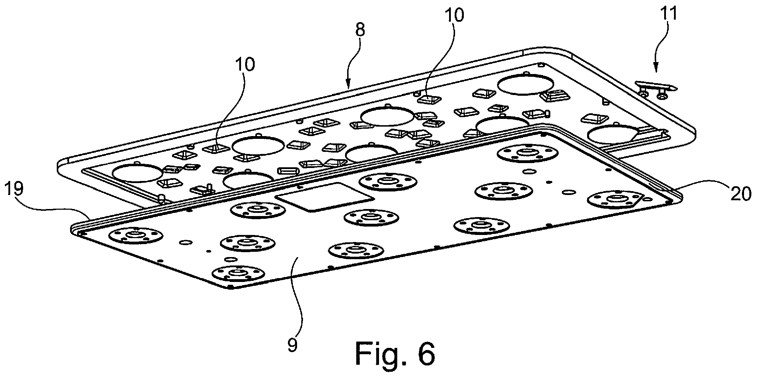

Fig. 5 zeigt eine Explosiv-Ansicht des zweiten Ausführungsbeispiels der erfindungsgemäßen Boden-Matte in perspektivische Darstellung von oben schräg rechts mit dem Oberteil 8 und dem Basisteil 9. Die verschiedenen Erhebungen 7 auf der Bodenschicht des Basisteils 9 und auch die Freiräume 15 zwischen den Erhebungen sind unregelmäßig verteilt. zeigt eine Draufsicht auf das. Die Tritt-Oberfläche des Oberteils 8 der Boden-Matte ist durch die Fase 14 begrenzt, wobei die hintere Fase steiler ausgebildet ist als die drei Fasen an den übrigen Rändern. Das Basisteil 9 weist einen umlaufenden Rand 19 auf, an dessen Unterseite eine nach innen zurückgesetzte Schulter 20 ausgebildet ist, vergl. auch Fig. 6.

Das im Oberteil 8 seitlich im Bereich der Fase vorgesehene Schild 13 weist zwei Einknöpf-Füße auf, die durch einen in der Fase ausgeschnittenen Schlitz 16 hindurch in die Aufnahme 12 eingeknöpft werden.

Fig. 6 zeigt eine Explosiv-Ansicht in perspektivischer Darstellung des zweiten Ausführungsbeispiels der erfindungsgemäßen Matte von unten schräg rechts. In dem Oberteil sind Ausnehmungen 10 sind ausgeformt, die sich von der Unterseite des Oberteils nach oben erstrecken. In diese Ausnehmungen 10 treten die Erhebungen 7 des Basisteils 9 nach dem Zusammenbau des Oberteils mit dem Basisteil ein. Unter dem umlaufenden Rand des Basisteils ist eine Schulter 20 ausgeformt.

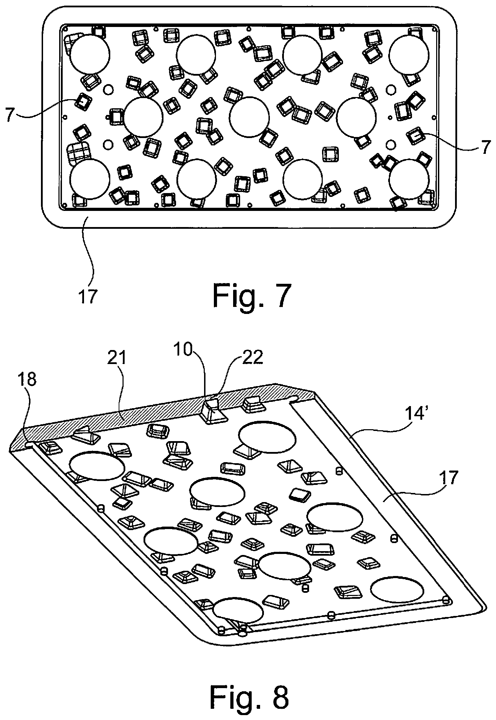

Fig. 7 zeigt eine Ansicht des Oberteils 8 der Matte von unten.

In Fig. 8 ist eine perspektivische Ansicht eines quer geschnittenen Oberteils von schräg unten dargestellt. In der Fläche 21 des Schnitts durch das Oberteil sind die Ausnehmungen 10 für die Erhebungen dargestellt, die zu Teil in der Schnittebene liegen, wobei die Bezugsziffer 22 die Materialdicke zwischen der Mattenfläche des Oberteils und einer Ausnehmung bezeichnet. In der Fläche des Schnitts ist eine Aufnahmenut 18 erkennbar, deren nach unten gewandte Nutwand an eine Auflagefläche 17 anschließt, bzw. einen Teil der Auflagefläche 17 selber bildet.

Wie die in Fig.8 wiedergegebene Seitenansicht des Oberteils 8 des weiteren zeigt, ist an dem Oberteil 8 ein umlaufender senkrechter Rand 14' ausgebildet, der an der Auflagefläche 17 der Matte endet. Die Auflagefläche 17 bildet somit die untere Seitenwand der innerhalb des Rands 14' umlaufenden Aufnahmenut 18, in die der umlaufende Seitenrand 19 des Basisteils 9 nach dem Zusammenbau des Ober-und des Basisteils eingreift.

Das Basisteil 9 der Boden-Matte mit den darauf angeordneten Elementen 3 nach dem ersten Ausführungsbeispiel ist in verschiedenen Ansichten in den Figuren 9a) und 9b) dargestellt. Dabei zeigt Fig. 9 a) die Draufsicht und Fig. 9 b) die Seitenansicht; in beiden Ansichten ist die Zufallsverteilung der die Elemente 3 bildenden Erhebungen 7 und die Freiräume 15 dazwischen deutliche erkennbar sind.

Die erfindungsgemäße Matte kann mit einer Anti-Rutsch Anordnung ausgestattet sein. Diese kann aus einem Auftrag einer weichen Gummischicht bestehen. In Abhängigkeit des Untergrunds kann auch eine andere Anordnung gewählt werden, die in jedem Fall sicherstellt, dass die Matte ortsfest verbleibt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann die Gestalt der Erhebungen von der eckigen Form abweichen, die Erhebungen können z.B. aus Kugeln oder andere Körpern mit dem Fuß zugewandten gekrümmten Oberflächen bestehen.

## Patentansprüche

1. Boden-Matte (1), die an einem Steharbeitsplatz verwendet werden kann, mit einer Mattenoberfläche (4) wobei eine unter der Mattenoberfläche (4) ausgebildete Matten-Struktur (2) aus einem elastomeren Werkstoff ist, in die unregelmäßig verteilt Elemente (3) angeordnet sind, deren Beschaffenheit härter ist als die Beschaffenheit des elastomerem Werkstoffs der Matten-Struktur (2), wobei die Matten-Struktur (2) auf einem Basisteil (9) angeordnet ist, auf/an dem die Elemente (3) in Form von Erhebungen (7) ausgebildet sind,
**dadurch gekennzeichnet, dass** die Matten-Struktur (2) ein Oberteil (8) mit darin geformten Ausnehmungen (10) ist, in denen die harten Elemente (3) aufnehmbar sind.

2. Boden-Matte nach Anspruch 1, wobei die Mattenoberfläche (4) eben ausgebildet ist, **dadurch gekennzeichnet, dass** die Elemente (3) mit der härteren Beschaffenheit durch unterschiedliche Materialien bereitgestellt sind und dass sich die Matten-Struktur (2) aus elastomerem Werkstoff an der Mattenoberfläche (4) im Wesentlichen homogen erstreckt.

3. Boden-Matte nach Anspruch 1 oder 2, **dadurch gekennzeichnet, dass** sich die Erhebungen (7) unterschiedlich hoch nach oben erstrecken.

4. Boden-Matte nach einem der vorangegangenen Ansprüche, **dadurch gekennzeichnet, dass** die Elemente (3) in ihren jeweiligen Längsrichtungen unterschiedliche Längen aufweisen.

5. Boden-Matte nach Anspruch 1 oder 2, **dadurch gekennzeichnet, dass** die Elemente (3) aus harten Einlagerungen (7') bestehen, die unterschiedlich groß ausgebildet auf einer Bodenschicht (6) des Basisteils (9) angeordnet sind.

6. Boden-Matte nach mindestens einem der Ansprüche 1 bis 5, **dadurch gekennzeichnet, dass** die Elemente (3) unterschiedlich geformte Körper sind.

7. Boden-Matte nach mindestens einem der vorangehenden Ansprüche, **dadurch gekennzeichnet, dass** eine Einrichtung zur Kennzeichnung (11) der Matte von oben sichtbar an der Matte (1) ausgebildet ist.

8. Boden-Matte nach Anspruch 7, **dadurch gekennzeichnet, dass** die Einrichtung zur Kennzeichnung (11) der Matte eine an dem Basisteil (9) angeordnete Aufnahme (12) und ein an der Aufnahme anbringbares Schild (13) aufweist.

9. Boden-Matte nach mindestens einem der vorangehenden Ansprüche, **dadurch gekennzeichnet, dass** das Basisteil mit einer Anti-Rutsch Anordnung ausgestattet ist.

10. Boden-Matte nach mindestens einem der vorangehenden Ansprüche, **dadurch gekennzeichnet, dass** an ihrem Rand eine umlaufende Fase (14) ausgebildet ist.

## Claims

1. Floor mat (1),-which can be used at a standing workplace, having a mat surface (4), wherein a mat structure (2) formed under the mat surface (4) is made of an elastomeric material, in said mat structure (2) irregularly distributed elements (3) are disposed, the texture of said elements (3) being harder than the texture of the elastomeric material of the mat structure (2), wherein the mat structure (2) is disposed on a base part (9), on/at which said elements (3) are formed in the shape of protrusions (7),
**characterized in that** the mat structure (2) is an upper part (8) with recesses (10) formed therein in which the hard elements (3) are receivable.

2. Floor mat according to claim 1, wherein the mat surface (4) is formed flat, **characterized in that** said elements (3) having the harder texture are provided by different materials and that said mat structure (2) of elastomeric material extends substantially homogeneously on said mat surface (4).

3. Floor mat according to claim 1 or 2, **characterized in that** the protrusions (7) extend upwards to different heights.

4. Floor mat according to one of the preceding claims, **characterized in that** said elements (3) have different lengths in their respective longitudinal directions.

5. Floor mat according to claim 1 or 2, **characterized in that** said elements (3) consist of hard inclusions (7') arranged in different sizes on a floor layer (6) of said base part (9).

6. Floor mat according to at least one of the claims 1 to 5, **characterized in that** said elements (3) are differently shaped bodies.

7. Floor mat according to at least one of the preceding claims, **characterized in that** a device for marking (11) said mat is formed on said mat (1) visibly from above.

8. A floor mat according to claim 7, **characterized in that** said device for marking (11) said mat has a receptacle (12) arranged on said base part (9) and a label (13) attachable to said receptacle.

9. Floor mat according to at least one of the preceding claims, **characterized in that** said base part is provided with an anti-slip arrangement.

10. Floor mat according to at least one of the preceding claims, **characterized in that** a circumferential bevel (14) is formed on its edge.

## Revendications

1. Tapis de sol (1) qui peut être utilisé au niveau d'un poste de travail en station debout, avec une surface de tapis (4), dans lequel une structure de tapis (2) réalisée sous la surface de tapis (4) est en un matériau élastmère, dans lequel des éléments (3) sont agencés en étant irrégulièrement répartis, dont la nature est plus dure que la nature du matériau élastomère de la structure de tapis (2), dans lequel la structure de tapis (2) est agencée sur une partie de base (9), sur/au niveau de laquelle les éléments (3) sont réalisés sous la forme d'élévations (7),
**caractérisé en ce que** la structure de tapis (2) est une partie supérieure (8) avec des évidements (10) formés dans celle-ci, dans lesquels les éléments (3) durs peuvent être reçus.

2. Tapis de sol selon la revendication 1, dans lequel la surface de tapis (4) est réalisée de manière plane, **caractérisé en ce que** les éléments (3) avec la nature plus dure sont fournis par différents matériaux et que la structure de tapis (2) en matériau élastomère s'étend de manière sensiblement homogène au niveau de la surface de tapis (4).

3. Tapis de sol selon la revendication 1 ou 2, **caractérisé en ce que** les élévations (7) s'étendent vers le haut à différente hauteur.

4. Tapis de sol selon l'une des revendications précédentes, **caractérisé en ce que** les éléments (3) présentent différentes longueurs dans leurs sens longitudinaux respectifs.

5. Tapis de sol selon la revendication 1 ou 2, **caractérisé en ce que** les éléments (3) se composent d'intercalations (7') dures qui sont agencées en étant réalisées avec une taille différente sur une couche de sol (6) de la partie de base (9).

6. Tapis de sol selon au moins l'une des revendications 1 à 5, **caractérisé en ce que** les éléments (3) sont des corps formés différemment.

7. Tapis de sol selon au moins l'une des revendications précédentes, **caractérisé en ce qu'**un dispositif pour la caractérisation (11) du tapis est réalisé de manière visible par le haut au niveau du tapis (1).

8. Tapis de sol selon la revendication 7, **caractérisé en ce que** le dispositif pour la caractérisation (11) du tapis présente un logement (12) agencé au niveau de la partie de base (9) et une étiquette (13) pouvant être montée au niveau du logement.

9. Tapis de sol selon au moins l'une des revendications précédentes, **caractérisé en ce que** la partie de base est configurée avec un agencement antiglisse.

10. Tapis de sol selon au moins l'une des revendications précédentes, **caractérisé en ce qu'**un chanfrein périphérique (14) est réalisé au niveau de son bord.
